**Europäisches Patentamt**

**European Patent Office**

**Office européen des brevets**

(19)

(11) Publication number: **0 591 391 B1**

# EUROPEAN PATENT SPECIFICATION

(45) Date of publication of patent specification: **12.07.95**  (51) Int. Cl.[6]: **C08L 67/02**, B65D 17/42

(21) Application number: **92914329.5**

(22) Date of filing: **18.06.92**

(86) International application number:
**PCT/US92/04965**

(87) International publication number:
**WO 93/00403 (07.01.93 93/02)**

(54) **PEELABLE SEAL COMPOSITIONS.**

(30) Priority: **25.06.91 US 720551**

(43) Date of publication of application:
**13.04.94 Bulletin 94/15**

(45) Publication of the grant of the patent:
**12.07.95 Bulletin 95/28**

(84) Designated Contracting States:
**CH DE FR GB IT LI NL SE**

(56) References cited:
**EP-A- 0 078 625**
**US-A- 4 680 340**

(73) Proprietor: **E.I. DU PONT DE NEMOURS AND COMPANY**
**1007 Market Street**
**Wilmington**
**Delaware 19898 (US)**

(72) Inventor: **DEAK, Gedeon, Imre**
**14 Ravine Road**
**Wilmington, DE 19810 (US)**

(74) Representative: **Abitz, Walter, Dr.-Ing. et al**
**Patentanwälte Abitz & Partner,**
**Poschingerstrasse 6**
**D-81679 München (DE)**

**Description**

TECHNICAL FIELD

This invention relates to a high temperature seal compositions which may be used as the seal for peelably lidded containers.

BACKGROUND ART

The replacement of tin-cans and glass jars with plastic containers has created the need for improved lidding for containers with a good seal, which can be easily opened by the consumer by peeling the lidding from the container. This lidding comprises a flexible substrate and sealant that is heat sealed to the container. This seal is generally accomplished by placing the lidding on the container to cover its opening and applying heat and pressure through the substrate to soften the sealant sufficiently to form the seal between the lidding and the lip of the container surrounding its opening. Unfortunately, the seal is often so strong that the lidding is difficult to remove, requiring puncturing of the lidding with a sharp instrument to enable at least the central part of the lidding to be torn away or spilling of the contents of the container due to removing the lidding with great force. Moreover, portions of lidding may remain adhered to the lip surrounding the container opening.

Predominant among these plastic conatiner materials are polyethylene terephthalate and polypropylene. Currently, different lidding sealants must be used for these two different materials.

Accordingly, the need exists for a single sealant to adhere to both polypropylene and polyethylene terephthalate which sealant should provide a seal to the container that is strong enough to provide a secure lidding closure for the container, yet also be weak enough to be easily peeled from the container. Furthermore, the seals need to withstand exposure at elevated temperatures, in order to sterilize the contents of the container.

The difficulty in obtaining this ideal condition arises from the nature of the container sealing process and the response of existing lidding sealants. The seal strength of existing sealants, such as ethylene vinyl acetate or copolymers of ethylene with (meth)acrylic acid, is too low at elevated temperatures, namely temperatures above 100°C. Accordingly, these sealants are not suitable for packages which must withstand elevated temperatures, typically in the sterilization of the content of the package, which temperature range is about 100 to 130°C.

Another disadvantage of existing sealants is that the peel strength to containers of different materials, e.g., of polyethylene, polypropylene, polyester, polystyrene, varies just because of the varying ability of the sealants to adhere to these different materials. Thus, sealants of different compositions have been required depending on the container material involved.

Thus, it is clearly desirable for a sealant to exist which has greater universality of application, i.e., adheres at least to polyester and polypropylene, and which provides seal characteristics whereby the seal has both integrity to protect the container contents and easy peelability. In other words, a need exists for use of plastic containers which can be opened easily by the consumer, yet maintain good seals at the elevated temperatures used to conserve food from bacterial spoilage.

U.S. Pat. 4,680,340, granted July 14, 1987 to Oreglia et al., discloses an approach to solve the problem of the need for seal integrity and easy peelability, but not high temperature seal integrity. The sealant consist of a blend polymer such as ionomer or ethylene/vinyl acetate copolymer of melt flow index less than 5 g/10 min with a polymer such an low density polyethylene, ethylene/vinyl acetate copolymer, and acid-modified ethylene/vinyl acetate copolymers having a melt flow index greater than 20 g/10 min. Both of these polymers have melting points of less than 100°C.

Summary of the Invention

The present invention provides for a peelable lidded container in which the sealing composition exhibits a good high temperature seal to both polyester and polypropylene. The temperature range, which can be withstood by the seal, is greater than about 100°C and less than about 130°C. The sealing composition may be part of the lidding or part of the container. In either case, the seal composition is always the surface layer of either the container or the lidding. In addition, the container can readily be opened by peeling away the lidding from the container.

The seal composition of the present invention comprises

a) 40 to 75 weight percent amorphous polyester resin; and a complemental amount to total 100 weight percent of

b) 25 to 60 weight percent of at least one polypropylene resin selected from the group consisting of

   (1) carboxyl functionalized polypropylene, and

   (2) a blend comprising

      i) 75 to 95 weight percent of unfunctionalized polypropylene, and complementally to total 100 weight percent

      ii) 5 to 25 weight percent of carboxyl functionalized ethylene polymer compound, and

   (3) a blend of b)(1) and b)(2)(ii), wherein the carboxyl functionalization of b)(1) and b)(2)(ii) is present in an effective amount to provide compatibility between components a) and b).

The seal composition may be applied to the surface of the container in the form of a thin surface layer or to the lidding surface to become part of the lidding, wherein the lidding surface is the side applied to adhere to the container. The seal is then adhered to either the lidding or the container by heat sealing the lidding's or the container's surface layer to the container or the lidding, respectively. The ability of the seal composition to adhere to either polypropylene or a polyester is a distinguishing feature of the present invention. When the seal is to polyester, i.e., either to the lidding or the container, such seal will withstand temperatures of at least about 100°C. Sealing to polypropylene may require that the food content of the container be sterilized by pasteurization rather than retorting.

Detailed Description of the Invention

The lidding component of the present invention has at least a flexible high temperature sealant structural member which is peelable from the container to which it is sealed. The lidding may also include a layer of the seal composition, otherwise the seal composition will be present as a layer on the exterior surface of the container. When the sealant composition is present as part of the lidding, then the structural member is a substrate for a layer of the seal composition. The lidding is anything that one would use to cover or close an object. One purpose of a lidding would be to prohibit the leakage or spillage from the object.

With respect to the seal composition, component a) is an amorphous polyester, which may also be a blend of two or more polyesters. The term "amorphous" used to describe the polyester means that the polyester must possess an amorphous phase. The polyester resin may also be partially crystalline, but the presence of the amorphous phase is necessary for the softening at temperatures below the crystalline melting point of any crystalline phase present. The softened polyester resin enables the seal composition to achieve the seal necessary for preserving the contents of the sealed container. The proportion of the amorphous phase is that which provides the necessary softness for sealing at the sealing temperatures normally used, e.g. 160 to 210°C, and preferably 180 to 200°C. The polyester resin can be entirely amorphous by choice of compositions or can contain a substantial proportion of crystalline phase, as long as sufficient amorphous phase is present to provide the softening needed. The significance of the crystalline phase is that it adds the strength to the seal composition at elevated temperatures.

The crystalline phase of the polyester resin, generally has a melting temperature below 250°C. Satisfaction of this temperature characteristic facilitates the blending process of the polyester and the polypropylene, component a) and component b), respectively, and prevents decomposition of the polypropylene. In order to make a melt blend, components a) and b) need to be heated well above the melting point of the highest melting component. The reason behind the temperature characteristic of less than 250°C is that the polypropylene starts to decompose at a temperature above 250°C. The general temperature in which components a) and b) are heated for melt blending is about 220°C.

The polyester generally has an inherent viscosity of 0.55 to 0.90. All inherent viscosities disclosed in this application are measured according to ASTM 4603-86. The polyester is preferably present in the blend with polypropylene resin in the amount of 50 to 65 weight percent.

The amorphous polyester resin can be a linear saturated condensation product of i) at least one glycol selected from the group of aliphatic glycols of the formula $HO(CH_2)_nOH$, where n is an integer from 2 to 10, cyclohexane-dimethanol, neopentyl-glycol and ii) at least one di-carboxylic acid having 8 to 14 carbon atoms, or reactive derivatives thereof.

Preferred polyesters are copolymers which comprise at least one of the following base polymers: polyethylene-terephthalate, polyethylene-isophthalate, polybutylene-terephthalate, polybutylene-isophthalate and poly(1,4-cyclohexane dimethanol)-terephthalate, polypropyleneterephthalate and polyethylene 2,6-napthalenedicarboxylic acid. Representative comonomers that can be used up to 50 weight percent are diethylene-glycol, 1,3-trimethylene-glycol, 1,4-tetramethylene-glycol, propylene-glycol, butylene-glycol, 1,6-

3

hexamethylene-glycol, 1,8-octamethylene-glycol, 1,10-decamethylene-glycol, diethylene-glycol, cyclohexane-dimethanol, terephthalic acid, isophthalic acid, aliphatic di-carboxylic acids (including succinic, adipic, azelaic, sebacic and dodecanediodic acids) and 1,4-cyclohexane-dicarboxylic acid and 2,6-naphthalene dicarboxylic acid.

Component b), polypropylene, can be a homopolymer of propylene and copolymers of propylene with up to about 6 weight percent ethylene, wherein the copolymer may be a random or block copolymer. Generally, the polypropylene has a melt flow from 0.4 to 10 g/10 min as measured by ASTM D-1238, Procedure L. The polypropylene may be a carboxyl functionalized polypropylene, b)(1), wherein the carboxyl functionalization can be derived from functional groups of free carboxylic acids, carboxylic acid esters and carboxylic anhydrides. A carboxylic acid ester may be reaction product of acrylic acid grafted polypropylene with sodium hydroxide. The carboxyl functionalization of b)(1) may be selected from the group consisting of acrylic acid, methacrylic acid, crotonic acid, fumaric acid, itaconic acid, maleic annydride, itaconic anhydride, ethylene acrylate, methyl methacrylate, ethyl maleate and 2-ethyl-hexyl acrylate. The carboxyl functionalization concentration may vary, as described below.

The carboxyl functionalization of the polypropylene can be done by grafting of the carboxyl containing compound onto the polypropylene by processes well known in the art. The carboxyl functionalized polypropylene can also include unmodified polypropylene as a way of reducing the amount of carboxyl functionalization of component b)(1).

The polypropylene may also be a blend of i) unfunctionalized polypropylene and ii) carboxyl functionalized ethylene polymer compound. The ethylene polymer will generally have a melt index (as measured by ASTM D-1238 Procedure F) from 0.3 to 8.0 g/10min, component b)(2). All the melt indexes in the present application will be measured by ASTM D-1238. Examples of ethylene polymers include those which are carboxyl functionalized by copolymerization of ethylene with one or more comonomers at least one of which is carboxyl containing. Examples of such polymers include copolymers of ethylene with at least one of the following: vinyl acetate, $C_1$-$C_4$(meth)acrylate, (meth)acrylic acid. The carboxyl functionalization may also be obtained by grafting a carboxyl-containing compound onto the ethylene polymer. Preferably the carboxyl-containing compound is maleic anhydride. The ethylene based polymer may be a copolymer or terpolymer. Ethylene vinyl-acetate is preferred.

The amount of the carboxyl functionalization or the acidic member is present in an effective amount in the seal composition to provide compatibility between components a) and b). In general, it is preferred to have the carboxyl functionalization at a concentration of 10 to 1400 millimoles per 100 grams of the polypropylene; and component b)(2), is present in the amount of 60 to 90 weight percent ethylene and 10 to 40 weight percent of at least one acidic member; and the preferred composition of the blend is 80 to 90 weight percent unfunctionalized polypropylene and 10 to 20 weight percent ethylene based polymer.

Component b)(2) may be a mixture of two or more polypropylene resins, with the mixture generally adhereing with the above melt flows, and the individual components having melt flows up to 50 g/10 min. It is preferred that the mixture melt flow be between 1-4.0 g/10 min as measured by ASTM D-1238, Procedure L.

Component b) is preferably present in the blend with the polyester resin in the amount of 35 to 50 weight percent.

Component b) may be either a carboxyl functionalized polypropylene or a blend of unfunctionalized polypropylene and a carboxyl functionalized ethylene polymer compound. The functionalization to both of the possible constituents of component b) is done to make component b) compatible with component a). If no functionalization takes place to the polypropylene component a) and b) will be incompatible and the seal composition will result in a material having low cohesive strength such that it cannot be processed into a film or an extrusion coated layer or an outer layer as part of the container. The carboxyl functionalization of either the polypropylene or the polyethylene polymer component or both, makes the resultant polymer polar instead of non-polar, so as to be compatible with the amorphous polyester which is also polar. Preferably for a given peel strength, e.g. at least 100 g/cm, the compatibiliy between components a) and b) is such that the layer of seal composition has sufficient cohesive strength to cause the failure to be in general to be adhesive failure between the layer of seal composition and either the lidding or the container depending on whether the layer was part of the container or the lidding, respectively. The compatibility can also be adjusted, so as to provide the necessary cohesive strength for the layer of seal composition during fabrication, but for it to fail cohesively when the lidding is peeled from the container.

4

General Process and Application

Common forms of plastic containers are pouches, thermoformed trays or bowls, and blow molded bottles. Attachment of this lidding to the container is usually accomplished by heat sealing, a process of applying heat and pressure to form a bond between the lidding and the container via the seal composition, whether such composition is part of the lidding or part of the container.

One method of practicing the present invention is to cast a thin layer, typically 0.01 to 0.10 mm thick, of the seal composition and laminate this layer with an adhesive to another thin structural member which provides the temperature resistance which in turn allows for heat sealing, along with other properties required such as toughness, water vapor and gas barrier.

Typical structural members on the lidding are biaxially oriented polyethyleneterephthalate or polyamide films, paper and aluminum foil. Often additional layers are employed as part of the lidding such as ethylene vinyl alcohol, polyvinylidene chloride or cast polyamide and appropriate adhesive layers, specifically suited to meet particular barrier functions and adhesive functions for adhering the barrier or other layers, to the structural member. The end result is a lidding suitable for enclosing plastic containers, which provides hermetic seals to those containers, yet can be opened without undue difficulties.

A modification of the procedure described immediately above is to extrusion coat the composition onto the structural member of the lidding, thus, eliminating the need for an adhesive layer and avoiding the extra process step of lamination.

Another method of utilizing the seal composition of the present invention is by applying it directly to the surface of the container. Bowls and trays are usually manufactured by first extrusion casting a thick (0.2 to 3.0 mm) sheet, and subsequently thermoforming the sheet into a finished container. This process is done by applying heat, a vacuum and/or pressure to conform the soft plastic sheet to a mold. A seal composition can be incorporated directly onto the container by laminating or coextruding a thin layer of the seal composition on the surface of the sheet made for thermoforming. An adhesive layer between the seal layer and the structural layer of the sheet may be needed The resulting container will have a seal surface which can be heat sealed to commercial lidding, and will provide peelable seals.

EXAMPLES

General Procedure for Examples 1 and 2

The seal composition in Examples 1 and 2 were applied on the surface of the containers. The components a) and b) of the seal compositions were pellet blended and subsequently melt blended on a 28 mm tri-lobal twin-screw melt processor made by the Werner & Pfleiderer Corp (Ramsey NJ) using screw speed of 120 rpm and typical melt temperatures in the 230 to 250°C range, at rates of 90 to 110 g/min. The molten composition was extruded through a single hole, 1/4" (6.35 mm) diameter die, the strand cooled in a water trough, and chopped into pellets.

Subsequently, polymeric sheet structures, which are the sheets used to make the container, were co-extrusion cast with three layers: a main layer to 1.0 to 1.2 mm thick made of a propylene homopolymer; a surface layer 0.06 to 0.08 mm thick and made of the respective seal composition, and a tie layer joining the propylene homopolymer layer and the layer of the seal composition, the tie layer 0.04 to 0.08 mm thick of a coextrudable adhesive resin. The structures were made form a co-extrusion sheet casting line, consisting of a 38 mm single screw extruder running at 70 to 75 rpm for the main layer; a 32 mm single screw extruder running at 12 rpm for the tie layer; and an 25 mm single screw extruder with a grooved feed section, running at 12 to 15 rpm for the surface layer. An adapter block, supplied by Johnson Machinery Co. was used to combine the three melt flows, which was extruded through a 355 mm wide sheet die made by Extrusion Dies Inc, using a 1.3 mm wide die gap. Extruder and die temperatures were 225 to 245°C. The melt temperatures were between 225 to 245°C. The extruded sheet, which is the container was chilled on a quench roll maintained between 70 and 80°C with hot water, and operating at take-off speeds of 0.8 to 0.9 m/min.

The sheet structures described above can be used to thermoform containers for packaging applications and will be referred to as containers. Usually such thermoformed containers are enclosed with a lidding, which is attached to the flange of the container by heat sealing. To simulate such closure, typical liddings were heat sealed to the surfaces of the containers or sheet structures, which had the seal composition layer on the surface, using heat seal conditions of 180°C jaw temperature, 1 sec dwell time and 207 kPa contact pressure. To simulate the opening of containers peel tests were performed with approximately a 180 degree peel angle on an Instron test instrument. The forces required for peeling were measured and are indicated in the following tables. Various lidding materials were employed. More specifically, the lidding was made of multiple layers and these layers were a foil lidding using a polypropylene surface layer; an oriented polyester film with a cast polyester surface layer; and an aluminum foil tape with a cast amorphous polyethyleneterephthalate (having an inherent viscosity of 0.59) layer. The latter was specifically prepared for this test in Examples 1 and 2.

Example 1

Seal composition D was prepared using 3.40 kg of a polyester consisting of and 85/15 weight percent ratio of terephthalic and isophthalic acid, the polyester having an inherent viscosity of 0.66, 2.72 kg of propylene homopolymer having a melt flow of 2.0 g/10 min and 0.68 kg of ethylene-vinylacetate having a melt index of 0.7 g/10 min and 18 percent by weight or vinylacetate. Seal composition E was prepared in a similar manner as seal composition D and the same components were used, however, the amounts were different. Specifically, 3.74 kg of the polyester, 2.72 kg of the polypropylene, and 0.34 kg of the ethylene-vinylacetate were used.

Using the procedure described above, a three layer container was made with seal compositions "D" and "E", a coextrudable adhesive resin having a melt flow of 2.0 g/10 min was used as the tie layer, and a propylene homopolymer having a melt flow of 2.0 g/ 10 min used as the main structural layer.

For comparison purposes, single layer sheets, Containers C2 and C3 were cast. Comparative Container C2 was 1.12 mm thick and made of propylene homopolymer having a melt flow of 5.0 g/10 min.; and Comparative Structure C3 was 0.51 mm thick and made of a polyethyleneterephthalate resin having an inherent viscosity of 0.59.

All four containers, namely D, E, C2 and C3 were heat sealed to liddings and the peel strength was tested as describe above. Peel tests were performed both at room temperatures and at 125°C temperature to assess performance under retorting conditions. The liddings uses were an aluminum foil tape with a cast amorphous polyethylene-terephthalate layer.

| Peel Force (g/cm) | | |
|---|---|---|
| At Room Temperature: | | |
| | Polypropylene Lidding | Polyester Lidding |
| Container D | 410 | 357 |
| Container E | 357 | 482 |
| *Container C2 | 1783 | < 25 |
| *Container C3 | < 25 | 160 |
| At 125°C | | |
| Container D | 143 | 214 |
| Container E | 107 | 321 |
| *Container C2 | 892 | < 25 |
| *Container C3 | < 25 | - |

\* Comparative Structure
- a dash denotes the test was not run

It can be seen that Containers D and E have good seal performance with both polypropylene and polyester surface lidding both at room temperature and at 125°C. In contrast, Comparative Containers C2 and C3 seal only to one kind of containers, each to containers made with seal-layers of similar or the same material as the comparative containers.

Example 2

Seal compositions G, H, I, and J were prepared identically to the procedure described in Example 1. Component a) was identical to the amorphous polyester in Example 1; however, the amounts were different. Component b) used in seal compositions G, H, I, and J represents component b)(1). Specifically, seal compositions G, H, I and J are listed below in amounts for component a) and amounts and identification of component b):

| Seal Comp. | Comp. (a) (Grams) | Comp. b ) (Grams) | | | |
|---|---|---|---|---|---|
| | | Unmod PP | Amount | Grafted PP | Amount |
| G | 2265 | PP/E | = 1812 | PP(AA) | = 453 |
| H | 2265 | PP(2) | = 1812 | PP(AA) | = 453 |
| I | 2492 | PP(5) | = 1586g | PP(AA) | = 453 |
| J | 2492 | -- | -- | PP(MA) | = 2038 |

wherein,
- "PP/E" is a copolymer of propylene with 5% ethylene
- "PP(2)" and "PP(5)" are propylene homopolymers having melt flows of 2.0 and 5.0 g/10 min, respectively.
- "PP(AA) and PP(MA) are acrylic acid and maleic anhydride grafted propylene polymers,having a melt flow of 12 g/10 min and 4.0 g/10 min, respectively.

Three-layer polymeric sheet structures or containers were made with the seal compositions G, H, I and J as the surface layer on the container, a main layer made of a propylene homopolymer having a melt flow of 5.0 g/10 min and 1.17 mm thickness and a tie layer made of a coextrudable adhesive resin having a melt flow of 4.0 g/10 min.

The containers were heat sealed to the lidding and the peel strength was tested. The same liddings were used as in Example 1, one with a polypropylene and the other with a polyester as indicated below. Peel tests were performed both at room temperature:.

| Peel Force (g/cm) | | |
|---|---|---|
| At Room Temperature | | |
| Container | Polypropylene Lidding | Polyester Lidding |
| G | 553 | 267 |
| H | 321 | 285 |
| I | 553 | 196 |
| J | 963 | 125 |

All the seal layers of these sheet samples tested provided good bonds to both kinds of lidding, whether the lidding had a polypropylene base or a polyester base seal surface.

Introduction For Examples 3 through 6.

In Examples 3 through 6, the seal composition is applied to and becomes part of the lidding instead of the container.

The components of the seal compositions for Examples 3 trough 6 were pellet blended and subsequently melt-blended on a 28 mm tri-lobal twin-screw melt processor made by the Werner & Pfleiderer Corp (Ramsey NJ) using a screw speed of 120 rpm. Typical melt temperatures for the melt blending were between 230 to 250°C, at rates of 90 to 140 g/min. The molten blend was extruded through a single hole, 1/4" (6.35 mm) diameter die, and the strand was cooled in a water trough, and chopped into pellets.

The seal compositions were formed into flexible liddings by various methods, as described in the following examples. In all cases, the actual layer of the seal composition was approximately 0.04 to 0.05 mm thick, and supported with either an oriented polyester film or with aluminum foil.

The liddings were heat sealed to flat pieces of sheet materials, 0.50 mm thick, which intended to simulate the flange areas of thermoformed containers. Two types of "containers" or sheets were used 1) made of a propylene homopolymer having a melt flow of 5.0 g/10 min and 2) made of a polyethylene-terephthalate having an inherent viscosity of 0.59. The latter was used either in amorphous condition or crystallized by heating it in a convection oven at 150°C for 4 minutes. Heat sealing conditions were 200°C seal-jaw temperature, 3/4 or 1 sec seal time, and 207 kPa contact pressure.

Subsequently, the lidding materials which were heat sealed to the containers or sheet materials were peel tested to asses the strengths of the seal compositions. Peel tests were performed on the heat seal at room temperature and at 125°C temperature with a 1 minute preheat time in a convection oven. An Instron tensile tester was used with either approximately 180 degree or 90 degree peel angle. In general, peel tests with 90 degree peel angle result in lower peel forces than with 180 degree peel angles due to less due to the mechanics of the peeling process. In Examples 4 and 6, the peel tests with a 90 degree peel angle were recorded at room temperature peel test only, because peeling at 180 degrees results in the peel forces being higher than the strength of the 23 micron polyester film backing. Thus, lidding would break rather than peel. Generally, in commercial practice when higher peel forces are required the lidding is reinforced with a stronger backing.

Example 3

Seal composition A was prepared by combining 14.95 kg of amorphous polyester, component a), described in Example 1 with 10.87 kg of propylene homopolymer having a melt flow of 2.0 g/10 min and 1.36 kg of ethylene-vinylacetate copolymer having an melt index of 0.7 g/10 min and a vinyl acetate content in the amount of 18 weight percent. The propylene homopolymer and the ethylene based polymer, namely the ethylene-vinylacetate copolymer form component b)(2) of the seal composition of the present invention. Seal composition B was prepared identically to seal composition A however it comprised 14.27 kg of the amorphous polyester, 10.87 kg of propylene homopolymer and 2.04 kg of ethylene-vinylacetate copolymer. Seal compositions A and B were prepared as described in the "Introduction to Examples 3 to 6".

A polyester film, 0.023 mm thick, which was treated with electric corona discharge the side to be coated, was extrusion coasted with seal compositions A and B for Liddings A and B, respectively. Each seal composition was extruded on a 25 mm diameter single screw extruder equipped with a grooved feed section, at a speed of 22 rpm and a rate of 130 g/min, at 240°C melt temperature through a 305 mm wide die having a 0.25 mm gap, onto a chill roll maintained at 80°C. The coating speed was 4 m/min. Lidding A had a coating thickness of 0.053 mm, and Lidding B had a coating thickness of 0.082 mm.

Lidding C1 is a comparative example. It is a commercial lidding material made by Reynolds Metals Co., in Richmond Va. This lidding material is aluminum foil based, with a polypropylene seal layer.

Liddings A, B and C1 were heat sealed to polypropylene and to amorphous polyethylene terephthalate containers or sheet materials. The peel tests were performed with an approximate 180 degree peel angle. Peel tests were performed both at room temperature and at 125°C to assess the performance of the seal composition under retorting conditions.

| Peel Force (g/cm) | | |
|---|---|---|
| At Room Temperature | | |
| | Polypropylene Container | Polyester Container |
| Lidding A | 125 | 375 |
| Lidding B | 232 | 303 |
| *Lidding C1 | 1783 | < 25 |
| At 125°C Temperature: | | |
| Lidding A | 18 | 321 |
| Lidding B | 18 | 339 |
| *Lidding C1 | 892 | < 25 |

*Comparative Example

The results show Lidding A and B to have good seal performance to both amorphous polyethyleneterephthalate and polypropylene containers at room temperature, and good seal performance to the polyethyleneterephthalate container at 125°C. In both cases the peel tests resulted in the lidding peeling away from the container. Comparative Lidding C1 has excessive peel strength to polypropylene and no seal to the polyester container.

## Example 4

Seal compositions K, L, M and N have the following compositions:

| Seal Composition | Comp a) | Amount | PP Amount | Comp. b) Ethylene Polymer | Amount |
|---|---|---|---|---|---|
| K | PETG | 2265 | 1812 | EVA | 453 |
| L | *2GT/I | 1812 | 2265 | EVA | 453 |
| M | 2GT/I | 2265 | 1812 | EMA | 453 |
| N | 2GT/I | 2265 | 1812 | EVA | 453 |

wherein, PETG is a copolymer of terephthalic acid with a 70/30 percent by weight of a mixture of ethane-diol and cyclohexane-diol having an inherent viscosity of 0.72;
- 2GT,I is the amorphous polyester described in Example 1;
- *2GT,I is similar to Example 1 except that the ratio of the terepthalic acid to the isophthalic acid is 55/45, and has an inherent viscosity of 0.55;
- PP is a propylene homopolymer having a melt flow of 5.0g/10 min;
- EVA is an ethylene-vinylacetate copolymer having a melt index of 6.0g/10 min and 28% by weight vinyl acetate; and
- EMA is an ethylene-methacrylate copolymer having a melt index of 2g/10 min and 20% by weight methacrylate.

These seal compositions were cast into thin films, 0.05 mm thick, extruding them with a 28 mm twin-screw melt processor, through a 200 mm wide flat film die and 0.20 mm wide gap onto a 150 mm Dia chill roll. The roll was maintained at 80°C temperature with hot water, and ran at a speed of 4.5 m/min. The resultant film of the seal compositions was somewhat hazy, but uniform in color and had very good appearance.

To simulate a lidding material, the seal film samples were laminated to aluminum foil tape. These laminates were heat-sealed to the polypropylene and the crystallized polyethyleneterephthalate containers or sheet materials and tested with 90 degree peel at room temperature and with 180° peel angle at 125°C temperature. These peel tests results are summarized in the table below:

| Peel Force (g/cm) | | |
|---|---|---|
| At Room Temperature | | |
| | Polypropylene Container | Crystalline Polyester Container |
| Lidding K | 62 | 324 |
| Lidding L | 388 | 390 |
| Lidding M | 127 | 454 |
| Lidding N | 125 | 247 |
| At 125'C Temperature | | |
| Lidding K | 106 | 41 |
| Lidding L | 63 | 49 |
| Lidding M | 108 | 54 |
| Lidding N | 90 | 58 |

The lidding materials made with the seal compositions of the present invention sealed well both to polypropylene and to polyester containers or sheets at room temperature. The peel tests resulted in the lidding peeling away from the container. Originally when the seals were tested at room temperature and a 180° peel angle was used, the correct peel strength could not be measured because the films broke; however, using a 90° peel angle test, the films did not break and the peel strength was measured.

Example 5

In contrast to the standard method of making seal compositions described in Example 4, above, seal composition "O" was prepared in a two-lobe 30 mm twin-screw melt processor made by Werner-Pfleiderer Corp., by continuously feeding the amorphous polyester described in Example 1 at a rate of 62 g/min; the polypropylene homopolymer described in Example 1, at a rate of 68 g/min; and the ethylene vinyl-acetate polymer described in Example 1, at a rate of 7.5 g/min. The processor was running at a screw speed of 150 rpm, and a melt temperature of 234°C. The molten composition was extruded through a die with a single hole 4.76 mm diameter, into a water quench, and after cooling was cut into pellets. Seal composition P was made identically to seal composition O; however, the feed rate of the polyester was 92 g/min, with rates of component b), the polypropylene and the ethylene vinyl-acetate remaining the same.

A polyester film, 0.023 mm thick, was surface treated with an electric discharge, and coextrusion coated. A thin tie layer, 0.01 mm thick, of the amorphous polyester used in the composition described in Example 1 was coextruded to be in contact with the polyester film simultaneously with a thicker (0.045 mm) layer of the seal compositions as the outer layer to make Liddings O and P, respectively. The polyester layer was extruded using a 25 mm single screw extruder having a grooved feed section, running at 11 rpm speed and with 243°C melt temperature. The seal compositions were extruded using two single screw extruders: 1) a 30 mm diameter extruder running at 20 rpm and 2) a 38 mm diameter extruder running at 30 rpm and 245°C melt temperature. A 355 mm wide flat film die was used on the extruder having a die gap of 0.25 mm. The coating speed was 9 m/min.

Liddings O and P were heat-sealed to polypropylene and crystallized polyester containers or sheet materials and peeled using 180° degree peel angle at room temperature and at 125°C temperature. The peel strengths are summarized below:

| Peel Force (g/cm) | | |
| --- | --- | --- |
| At Room Temperature | | |
| | Polypropylene Containers | Crystalline Polyester Containers |
| Lidding O | 552 | 751 |
| Lidding P | 338 | 1214 (@190°C) |
| At 125°C Temperature | | |
| Lidding O | 75 | 324 |
| Lidding P | 32 | 506 |

Liddings "O" and "P" seal well to crystallized polyester container or sheet and maintain good strengths at the elevated 125°C temperature. The seal strengths to polypropylene sheet is lower, but still greater than 100 g/cm at room temperature. The peel tests resulted in the lidding peeling away from the container with partial cohesive failure in the seal composition.

Example 6

Seal compositions R, S and C4 were prepared as described in the introduction, except that the twin-screw processor was equipped with a 20/60/100/20 mesh screen pack; and the screw speed was 150 rpm with an extrusion rate of 142 g/min. Seal composition R comprised 4349 g of the amorphous polyester described for seal composition K, in Example 4, 4077 g of the propylene homopolymer described in Example 1 and 634 g of ethylene-vinylacetate polymer described in Example 1. Seal composition S comprised 2990 g of the same amorphous polyester as in composition R, 1359 g of polybutylene-terephthalate, which was a condensation polymer of butane-diol and terephthalic acid having an inherent viscosity of 0.79, 4077 g of the propylene homopolymer and 634 g of ethylene vinyl-acetate described in composition R. Comparative seal composition C4 comprised 4349 g of the polybutylene-terephthalate, 4077 g of the propylene homopolymer and 634 g of the ethylene vinyl-acetate and no PETG polymer.

The liddings were prepared with seal compositions R, S and C4 by coextrusion, coating the seal compositions onto a 0.023 thick polyester film (described in Example 5). The liddings were heat-sealed to polypropylene and crystallized polyester containers or sheet materials and the peel strengths were tested at both room temperature using a 90° peel angle, and at 125°C temperature using 180° peel angle. However, the heat seals to the crystalline polyester container or sheet for room temperature testing were made with 180°C seal jaw temperature. The peel strengths are shown below:

| Peel Strength (g/cm) | | |
|---|---|---|
| At Room Temperature | | |
| | Polypropylene Container | Crystalline polyester Container |
| Lidding R | 44 | 452 |
| Lidding S | 75 | 779 |
| *Lidding C4 | 27 | 83 |
| At 125°C Temperature | | |
| Lidding R | <20 | 321 |
| Lidding S | <20 | 321 |
| Lidding C4 | -- | -- |

*Comp. Sample
- dashes denotes that the test was not run.

The polyester Liddings R and S, seal well to crystallized polyester containers and in a lesser extent to the polypropylene containers at room temperature. Significant seal strengths are maintained with the crystallized polyester container at the elevated 125°C temperature. During the peel testing, the lidding peeled away from the container with occasional, partial cohesive failure of the seal composition. Comparative lidding C4, made with a polyester component of all polybutylene-terephthalate has seal strengths below 100 g/cm to both polypropylene and polyester containers, because it is lacking adequate amorphous polyester resin.

## Claims

1. A peelable lidded container wherein a sealing composition provides the seal, the sealing composition comprising:
   a) 40 to 75 weight percent amorphous polyester resin; and a complemental amount to total 100 weight percent of
   b) 25 to 60 weight percent of at least one polypropylene resin selected from the group consisting of
      (1) carboxyl functionalized polypropylene,
      (2) a blend of
         (i) 75 to 95 weight percent of unfunctionalized polypropylene and complementally to total 100 weight percent
         (ii) 5 to 25 weight percent of carboxyl functionalized ethylene polymer compound, and
      (3) a blend of b)(1) and (b)(2)(ii),
   wherein the carboxyl functionalization of b)(1) and b)(2)(ii) is present in an effective amount to provide compatibility between components a) and b).

2. The container of Claim 1 wherein component a) is present in the amount of 50 to 65 weight percent and component b) is present in the amount of 35 to 50 weight percent.

3. The container of Claim 1 wherein the component a) is a copolymer selected from the group consisting of polyethylene-terephthalate/polyethylene-isophthalate, polybutylene-terephthalate/polybutylene-isophthalate and poly(1,4-cyclohexanedimethanol)-terephthalate/polyethylene-terephthalate.

4. The container of Claim 3 wherein the copolymer of polyethylene-terephthalate/polyethylene-isophthalate has a weight ratio between 90:10 and 80:20.

5. The container of Claim 1 wherein component a) has an inherent viscosity between 0.55 and 0.90.

6. The container of Claim 1 wherein the seal composition is present as a layer on the container.

7. The container of Claim 6 in the form of pouches, thermoformed trays, thermoformed bowls or blow-molded bottles.

8. The container of Claim 1 wherein the seal composition is present as a layer of the peelable lid.

9. The container of Claim 1 wherein the container is comprised of the group consisting of polypropylene and polyester and the peelable lid includes a layer of polyester.

10. The container of Claim 1 wherein the container is comprised of the group consisting of polyester and polypropylene and the peelable lid includes a layer of polypropylene.

11. A composition comprising
   a) 40 to 75 weight percent amorphous polyester resin; and a complemental amount to total 100 weight percent of
   b) 25 to 60 weight percent of at least one polypropylene resin selected from the group consisting of
      (1) carboxyl functionalized polypropylene,
      (2) a blend of
         (i) 75 to 95 weight percent of unfunctionalized polypropylene and complementally to total 100 weight percent
         (ii) 5 to 25 weight percent of carboxyl functionalized ethylene polymer compound, and
      (3) a blend of b)(1) and b)(2)(ii),
   wherein the carboxyl functionalization of b)(1) and b)(2)(ii) is present in an effective amount to provide compatibility between components a) and b).

12. The composition of Claim 11, wherein the carboxyl functionalization of the polypropylene is derived from functional groups of free carboxylic acids, carboxylic acid esters and carboxylic anhydrides.

13. The composition of Claim 11, wherein the carboxyl functionalization of the polypropylene is present at a concentration of 10 to 1400 millimoles per 100 grams of the carboxyl functionalized polypropylene.

14. The composition of Claim 11, wherein component b)(2)(ii) is ethylene/vinyl-acetate.

15. The composition of Claim 11 wherein the carboxyl functionalization of the polypropylene in component b)(1) is selected from the group consisting of acrylic acid, methacrylic acid, crotonic acid, fumaric acid, itaconic acid, maleic anhydride, itaconic anhydride, ethylene acrylate, methyl methacrylate, ethyl maleate and 2-ethyl-hexyl acrylate.

16. A lidding comprising a flexible substrate and a layer of the seal composition of Claim 11 thereon.

**Patentansprüche**

1. Behälter mit abziehbarem Deckel, worin eine Verschlußmasse den Verschluß bereitstellt und die Verschlußmasse umfaßt:
   a) 40 bis 75 Gew.-% amorphes Polyesterharz und eine Restmenge auf insgesamt 100 Gew.-% von
   b) 25 bis 60 Gew.-% von wenigstens einem Polypropylenharz, ausgewählt aus der Gruppe, bestehend aus
      (1) Carboxy-funktionalisiertem Polypropylen,
      (2) einem Gemisch von
         (i) 75 bis 95 Gew.-% unfunktionalisiertem Polypropylen und als Rest auf 100 Gew.-%,
         (ii) 5 bis 25 Gew.-% einer Carboxy-funktonalisierten Ethylen-Polymer-Verbindung, und
      (3) einer Mischung von b)(1) und b)(2)(ii), worin die Carboxy-Funktionalisierung von b)(1) und b)-(2)(ii) in einer wirksamen Menge vorhanden ist, um zwischen den Komponenten a) und b) eine Kompatibilität bereitzustellen.

EP 0 591 391 B1

**2.** Behälter nach Anspruch 1, worin Komponente a) in der Menge von 50 bis 65 Gew.-% und Komponente b) in der Menge von 35 bis 50 Gew.-% vorhanden sind.

**3.** Behälter nach Anspruch 1, worin die Komponente a) ein Copolymer ist, ausgewählt aus der Gruppe, bestehend aus Polyethylen-Terephthalat/Polyethylen-Isophthalat, Polybutylen-Terephthalat/Polybutylen-Isophthalat und Poly(1,4-cyclohexandimethanol)-Terephthalat/Polyethylen-Terephthalat.

**4.** Behälter nach Anspruch 3, worin das Copolymer von Polyethylen-Terephthalat/Polyethylen-Isophthalat ein Gewichtsverhältnis zwischen 90:10 und 80:20 besitzt.

**5.** Behälter nach Anspruch 1, worin Komponente a) eine inhärente Viskosität von 0,55 bis 0,90 besitzt.

**6.** Behälter nach Anspruch 1, worin die Verschlußmasse als Schicht auf den Behälter vorhanden ist.

**7.** Behälter nach Anspruch 6 in Form von Beuteln, wärmegeformten Schalen, wärmegeformten Schüsseln oder blasgeformten Flaschen.

**8.** Behälter nach Anspruch 1, worin die Verschlußmasse als Schicht des abziehbaren Deckels vorhanden ist.

**9.** Behälter nach Anspruch 1, worin der Behälter aus der Gruppe, bestehend aus Polypropylen und Polyester, besteht und der abziehbare Deckel eine Polyesterschicht umfaßt.

**10.** Behälter nach Anspruch 1, worin der Behälter aus der Gruppe, bestehend aus Polyester und Polypropylen, besteht und der Deckel eine Polypropylenschicht umfaßt.

**11.** Masse, umfassend
a) 40 bis 75 Gew.-% amorphes Polyesterharz und eine Restmenge auf insgesamt 100 Gew.-% von
b) 25 bis 60 Gew.-% von wenigstens einem Polypropylenharz, ausgewählt aus der Gruppe, bestehend aus
(1) Carboxy-funktionalisiertem Polypropylen,
(2) einer Mischung von
(i) 75 bis 95 Gew.-% unfunktionalisiertem Polypropylen und als Rest auf insgesamt 100 Gew.-%,
(ii) 5 bis 25 Gew.-% einer Carboxyfunktonalisierten Ethylenpolymer-Verbindung, und
(3) einer Mischung von b)(1) und b)(2)(ii), worin die Carboxy-Funktionalisierung von b)(1) und b)-(2)(ii) in einer wirksamen Menge vorhanden ist, um eine Kompatibilität zwischen den Komponenten a) und b) bereitzustellen.

**12.** Masse nach Anspruch 11, worin sich die Carboxy-Funktionalisierung von Polypropylen von funktionellen Gruppen mit freien Carbonsäuren, Carbonsäureestern und Carbonsäureanhydriden ableitet.

**13.** Masse nach Anspruch 11, worin die Carboxy-Funktionalisierung des Polypropylens in einer Konzentration von 10 bis 1 400 mmol pro 100 g des Carboxy-funktionalisierten Polypropylens vorhanden ist.

**14.** Masse nach Anspruch 11, worin Komponente b)(2)(ii) Ethylen/Vinylacetat ist.

**15.** Masse nach Anspruch 11, worin die Carboxy-Funktionalisierung des Polypropylens in Komponente b)-(1) ausgewählt ist aus der Gruppe, bestehend aus Acrylsäure, Methacrylsäure, Crotonsäure, Fumarsäure, Itaconsäure, Maleinsäureanhydrid, Itaconsäureanhydrid, Ethylenacrylat, Methylmethacrylat, Ethylmaleat und 2-Ethylhexylacrylat.

**16.** Deckelvorrichtung, umfassend ein biegsames Substrat und eine Schicht der Verschlußmasse von Anspruch 11 darauf.

13

**Revendications**

1.  Un récipient à couvercle détachable, dans lequel une composition de scellage constitue le joint, la composition de scellage comprenant :
    a) 40 à 75 pour cent en poids de résine polyester amorphe ; et une quantite complémentaire, pour un total de 100 pour cent en poids, de
    b) 25 à 60 pour cent en poids d'au moins une résine de polypropylène choisie dans le groupe formé par
        (1) un polypropylène à fonctionnalité carboxyle,
        (2) un mélange de
            (i) 75 à 95 pour cent en poids de polypropylène non fonctionnalisé et, de façon complémentaire pour un total de 100 pour cent en poids,
            (ii) 5 à 25 pour cent en poids de polymère d'éthylène à fonctionnalité carboxyle, et
        (3) un mélange de b)(1) et b)(2)(ii),
    où la fonctionnalité carboxyle de b)(1) et b)(2)(ii) est présente en une quantité efficace pour assurer la compatibilité entre les composants a) et b).

2.  Le récipient de la revendication 1, dans lequel le composant a) est présent en une quantité de 50 à 65 pour cent en poids et le composant b) est présent en une quantité de 35 à 50 pour cent en poids.

3.  Le récipient de la revendication 1, dans lequel le composant a) est un copolymère choisi dans le groupe formé par un polytéréphtalate d'éthylène/polyisophtalate d'éthylène, un polytéréphtalate de butylène/polyisophtalate de butylène et un polytéréphtalate de cyclohexane-1,4-diméthanol/polytéréphtalate d'éthylène.

4.  Le récipient de la revendication 3, dans lequel le copolymère de polytéréphtalate d'éthylène/polyisophtalate d'éthylène a un rapport en poids compris entre 90:10 et 80:20.

5.  Le récipient de la revendication 1, dans lequel la viscosité inhérente du composant a) est comprise entre 0,55 et 0,90.

6.  Le récipient de la revendication 1, dans lequel la composition de scellage est présente sous forme d'une couche sur le récipient.

7.  Le récipient de la revendication 6, sous la forme de sacs, plateaux thermoformés, bols thermoformés ou bouteilles moulées par soufflage.

8.  Le récipient de la revendication 1, dans lequel la composition de scellage est présente sous forme d'une couche du couvercle détachable.

9.  Le récipient de la revendication 1, dans lequel le récipient est constitué d'un matériau du groupe formé par un polypropylène et un polyester et le couvercle détachable comprend une couche de polyester.

10. Le récipient de la revendication 1, dans lequel le récipient est constitué d'un matériau du groupe formé par un polyester et un polypropylène et le couvercle détachable comprend une couche de polypropylène.

11. Une composition comprenant
    a) 40 à 75 pour cent en poids de résine polyester amorphe ; et une quantité complémentaire, pour un total de 100 pour cent en poids, de
    b) 25 à 60 pour cent en poids d'au moins une résine de polypropylène choisie dans le groupe formé par
        (1) un polypropylène à fonctionnalité carboxyle,
        (2) un mélange de
            (i) 75 à 95 pour cent en poids de polypropylène non fonctionnalisé et, de façon complémentaire pour un total de 100 pour cent en poids,
            (ii) 5 à 25 pour cent en poids de polymère d'éthylène à fonctionnalité carboxyle, et

(3) un mélange de b)(1) et b)(2)(ii),

où la fonctionnalité carboxyle de b)(1) et b)(2)(ii) est présente en une quantité efficace pour assurer la compatibilité entre les composants a) et b).

12. La composition de la revendication 11, dans laquelle la fonctionnalité carboxyle du polypropylène provient de groupes fonctionnels d'acides carboxyliques libres, d'esters d'acides carboxyliques et d'anhydrides carboxyliques.

13. La composition de la revendication 11, dans laquelle la fonctionnalité carboxyle du polypropylène est présente à une concentration de 10 à 1400 millimoles pour 100 grammes du polypropylène à fonctionnalité carboxyle.

14. La composition de la revendication 11, dans laquelle le composant b)(2)(ii) est un éthylène/acétate de vinyle.

15. La composition de la revendication 11, dans laquelle la fonctionnalité carboxyle du polypropylène dans le composant b)(1) est choisie dans le groupe formé par l'acide acrylique, l'acide méthacrylique, l'acide crotonique, l'acide fumarique, l'acide itaconique, l'anhydride maléique, l'anhydride itaconique, l'acrylate d'éthylène, le méthacrylate de méthyle, le maléate d'éthyle et l'acrylate de 2-éthylhexyle.

16. Un couvercle comprenant un substrat flexible et, sur celui-ci, une couche de la composition de scellage de la revendication 11.